## Europäisches Patentamt

## European Patent Office

## Office européen des brevets

(19)

(11) Veröffentlichungsnummer: **0 045 099**
A2

(12) **EUROPÄISCHE PATENTANMELDUNG**

(21) Anmeldenummer: **81200672.4**

(22) Anmeldetag: **16.06.81**

(51) Int. Cl.³: **H 02 K 9/19**, H 02 K 3/22

(30) Priorität: **25.07.80 DE 3028177**

(43) Veröffentlichungstag der Anmeldung: **03.02.82**
Patentblatt 82/5

(84) Benannte Vertragsstaaten: **CH DE FR IT LI SE**

(71) Anmelder: **BBC Aktiengesellschaft Brown, Boveri & Cie.,
CH-5401 Baden (CH)**

(72) Erfinder: **Kiefi, Rudolf Simon, Bühlerstrasse 1,
D-6800 Mannheim 61 (DE)**

(54) **Flüssigkeitsgekühlter Generator.**

(57) Bei einem flüssigkeitsgekühlten Generator mit einer Rotorwicklung mit Kühlkanälen (7) und mit an den Wicklungsenden angeordneten druckfesten Isolierschläuchen (9) sind letztere an eine auf dem Rotor angeordnete Wasserkammer (8) angeschlossen. Die Verbindung des druckfesten Isolierschlauches (9) mit den Leiterenden der Rotorwicklung wird dadurch verbessert, dass der druckfeste Isolierschlauch mit einem ersten Leiter (7.1) verbunden ist und dass zwischen dem Kühlkanal des ersten Leiters und mindestens dem Kühlkanal eines zweiten Leiters (7.2) ein interner Verbindungskanal (10) besteht.

576/80

BBC Aktiengesellschaft Brown, Boveri & Cie., Baden

## Flüssigkeitsgekühlter Generator

Die Erfindung bezieht sich auf einen flüssigkeitsgekühlten Generator mit einer Rotorwicklung mit Kühlkanälen in den Leitern, und mit an den Wicklungsenden versehenen druckfesten Isolierschläuchen, die an einer auf dem Rotor angeordneten Wasserkammer angeschlossen sind.

Nachdem die Flüssigkeitskühlung der Statorwicklung für größere Generatoren seit einer Reihe von Jahren angewendet wird, ist man seit kurzem dazu übergegangen die Flüssigkeitskühlung auch auf die Rotorwicklung anzuwenden.

Mit Hilfe einer intensiven Abfuhr der Wärmeverluste läßt sich die Entwicklung von Großgeneratoren in konventioneller Technik erfolgreich durchführen. Für die intensive Kühlung ist die Flüssigkeitskühlung mit Wasser als Kühlmittel, wegen seiner hohen Wärmekapazität besonders gut geeignet.

Die stabförmigen Leiter der Rotorwicklung sind jeweils mit einem Kühlkanal versehen, der von Kühlwasser durchströmt wird, so daß es zwischen dem Leiter und dem Kühlwasser zu einem direkten Wärmekontakt kommt, wodurch die Wärmeabfuhr weiterhin unterstützt wird. Jede Windung der Rotorwicklung wird separat von Kühlwasser durchströmt.

Es ist eine Flüssigkeitskühlung für eine Rotorwicklung bekanntgeworden, indem das Kühlwasser aus einer auf dem Rotor angeordneten Wasserkammer und daran angeschlossenen druckfesten Isolierschläuchen den Leitern der Rotorwicklung zugeführt wird. Dabei sind die Isolierschläuche am anderen Ende mit einem Abzweigstück versehen, das auf der Zuflußseite einen Anschluß für den Isolierschlauch aufweist, und auf der Abflußseite zwei Öffnungen hat, die jeweils mit dem Kühlkanal eines Leiters verbunden sind.

Diese Art der Verbindung von Isolierschlauch und Leiter unter Zwischenschaltung eines Abzweigstückes, erweist sich als sehr aufwendig. Es sind erhebliche Abdichtungsprobleme zu bewältigen. Dadurch entstehen relativ hohe Fertigungskosten für die Abzweigstücke. Desweiteren erweist sich der Anschluß der Abzweigstücke als schwierig, da er nur bei eingebauter Rotorwicklung erfolgen kann. Es sind zwei Leiterenden jeweils über einen Lötkonus mit dem Abzweigstück zu verlöten, wodurch sich hohe Werte für die Richt- und Lötzeiten ergeben.

Der Erfindung liegt die Aufgabe zugrunde, die Verbindung des druckfesten Isolierschlauches mit dem Wicklungsende zu vereinfachen sowie die Dichtigkeit der Verbindung zu verbessern.

Diese Aufgabe wird erfindungsgemäß dadurch gelöst, daß der druckfeste Isolierschlauch mit einem ersten Leiter verbunden ist, und daß zwischen dem Kühlkanal des ersten Leiters und mindestens den Kühlkanal eines zweiten Leiters ein interner Verbindungskanal besteht.

Eine zweckmäßige Weiterbildung der Erfindung besteht darin, daß die Wicklungsenden mit dem internen Verbindungskanal, als separates Leiterendstück ausgebildet sind.

Die mit der Erfindung erzielten Vorteile bestehen insbesondere darin, daß das Abzweigstück entfallen kann. Desweiteren wird die Anzahl der Anschlußverbindungen verringert, wodurch sich die Gefahr eventuell auftretender Leckagen vermindert.

Ein Ausführungsbeispiel der Erfindung ist in der Zeichnung dargestellt und wird im folgenden näher beschrieben.
Es zeigt:

Fig. 1      den Rotor eines Turbogenerators in schematischer Darstellung;

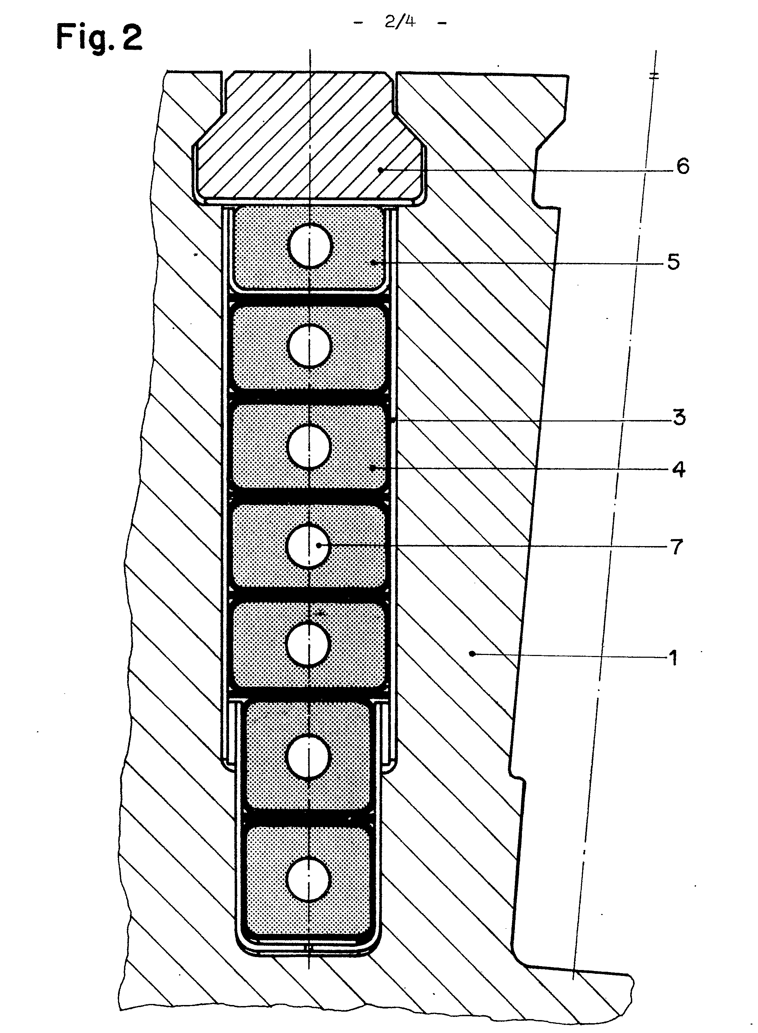

Fig. 2      einen Schnitt durch eine Rotornut mit wassergekühlten Leitern des in Fig. 1 dargestellten Rotors;

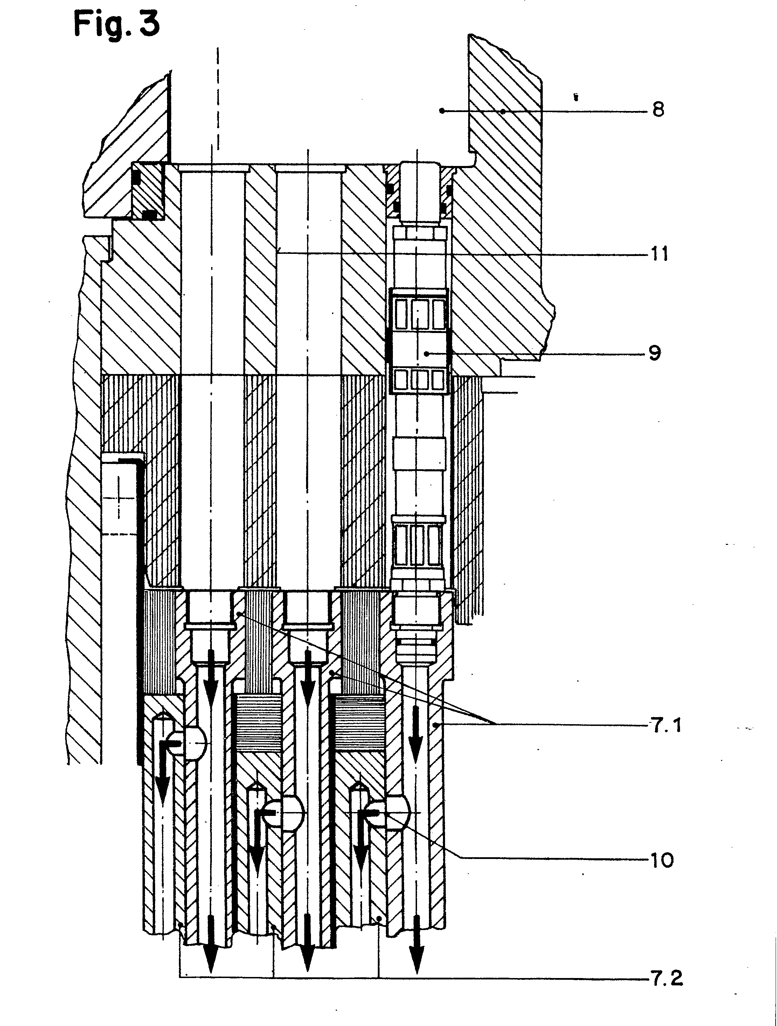

Fig. 3      eine Isolierschlauchverbindung zwischen einer Wasserkammer und einem Wicklungsende der Rotorwicklung;

Fig. 4      ein separates Leiterendstück mit einem Verbindungskanal zu einem zweiten Leiter.

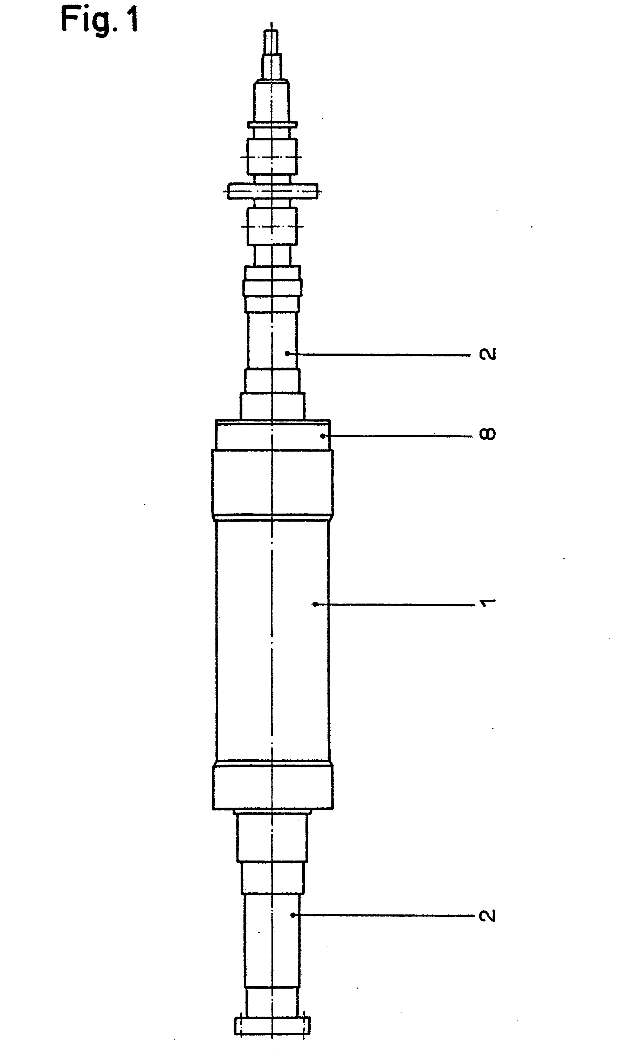

Der in Fig. 1 dargestellte Rotor eines Turbogenerators weist einen Läuferkörper 1 auf, mit seitlich eingesetzten Wellenstümpfen 2. In den Läuferkörper sind Nuten 3 eingefräst, welche die Erregerwicklung aufnehmen. Die Erregerwicklung setzt sich aus einzelnen stabförmigen Kupferleitern 4 zusammen, die in die Nuten 3 des Läuferkörpers 1 eingezogen werden, und durch außerhalb der Nuten verlaufende Verbindungsteile

- 4 -

0045099

(Spulenköpfe) miteinander verbunden sind. Als oberste Lage sind in den Nuten 3 Dämpferstäbe 5 angeordnet, die zu einer Dämpferwicklung zusammengeschaltet sind zur Unterdrückung unerwünschter Oberwellen. Die Erregerwicklung wird in den Nuten durch Nutenverschlußstäbe 6 und im Wicklungskopf durch Induktorkappen gegen die Fliehkräfte gehalten. Die Leiter 4 sowie die Dämpferstäbe 5 sind mit Kühlkanälen 7 versehen, die von Kühlwasser durchströmt werden.

Auf dem Rotor ist kreisringförmig eine Wasserkammer 8 angeordnet, die mit einem durch die Achse des Rotors geführten Rohrsystem mit dem äußeren, nicht näher dargestellten Teil des Wasser-Kühlkreises für den Rotor, verbunden ist. Die Wasserkammer 8 ist sektorförmig unterteilt und an ihrer Seitenwand zu den Wicklungsenden hin mit Bohrungen 11 versehen, in die druckfeste Isolierschläuche 9 mit ihrem einen Ende eingesetzt sind, während das andere Ende des Isolierschlauches mit einem Wicklungsende der Rotorwicklung verbunden ist. Dabei ist zu erkennen, daß der Isolierschlauch 9 mit einem Leiterende 7.1 verschraubt wird, und daß zwischen dem Leiterende 7.1 und dem Leiterende 7.2 ein interner Verbindungskanal 10 besteht, so daß das Kühlwasser aus der Wasserkammer 8 in die beiden Leiterenden 7 .1 und 7.2 fließen kann, und nach dem Durchströmen einer Windung der Wicklung über das nicht näher dargestellte zweite Ende der Wicklung und einen damit verbunden Isolierschlauch in die Wasserkammer wieder zurückfließt.

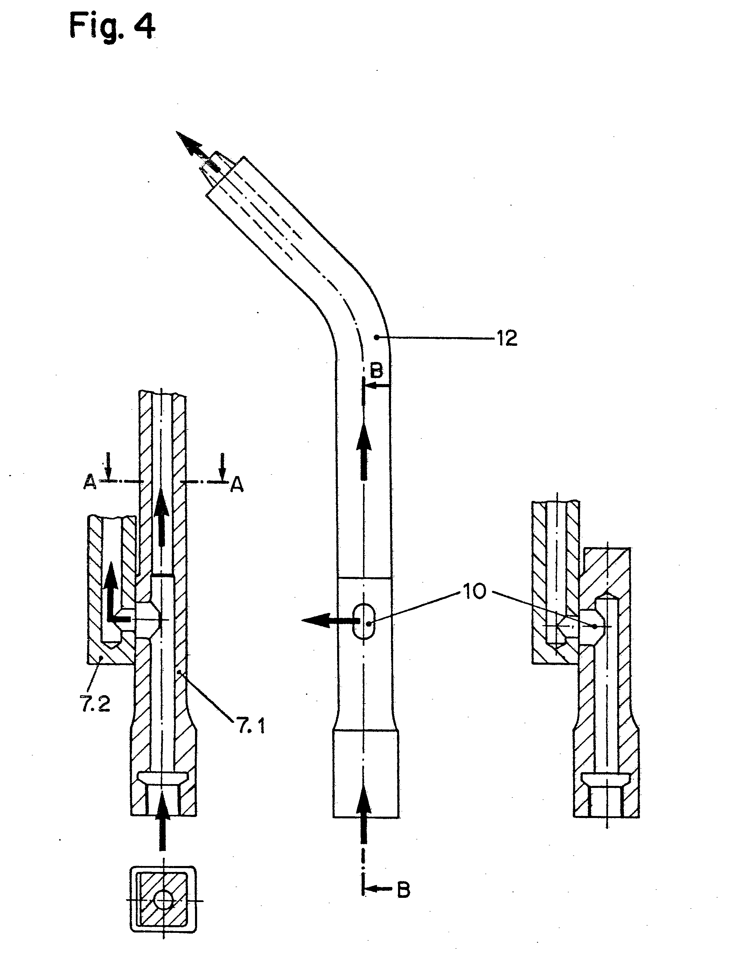

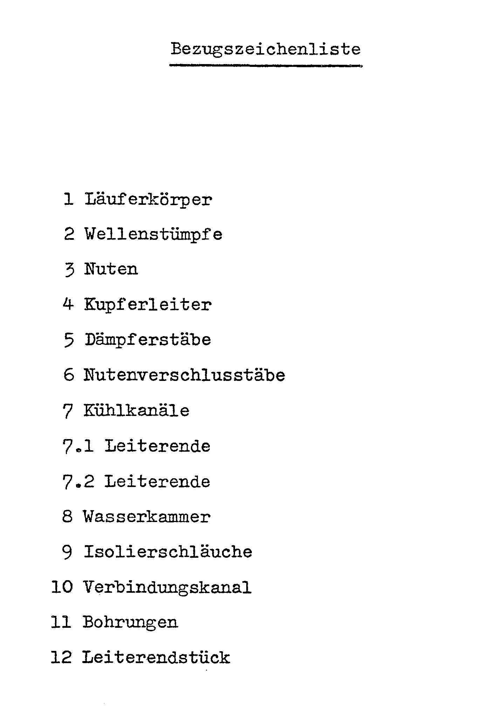

In Fig. 4 ist im Detail zu erkennen, wie der Kühlkanal des Leiters 7.1 über einen Verbindungskanal 10 mit dem Kühlkanal des Leiterendes 7.2 verbunden ist. Die Wicklungsenden sind hier als separate Leiterendstücke ausgebildet.

A n s p r ü c h e

1. Flüssigkeitsgekühlter Generator mit einer Rotorwicklung mit Kühlkanälen in den Leitern, und mit an den Wicklungsenden versehenen druckfesten Isolierschläuchen, die an einer auf dem Rotor angeordneten Wasserkammer angeschlossen sind, dadurch gekennzeichnet, daß der druckfeste Isolierschlauch (9) mit einem ersten Leiter (7.1) verbunden ist, und daß zwischen dem Kühlkanal des ersten Leiters und mindestens dem Kühlkanal eines zweiten Leiters (7.2) ein interner Verbindungskanal (10) besteht.

2. Flüssigkeitsgekühlter Generator nach Anspruch 1, dadurch gekennzeichnet, daß die Wicklungsenden mit dem internen Verbindungskanal (10), als separates Leiterendstück (12) ausgebildet sind.

0045099

Fig. 1

- 1/4 -

0045099

Fig. 2

6

5

3

4

7

1

0045099

**Fig. 3**

8

11

9

7.1

10

7.2

# Fig. 4

0045099

Bezugszeichenliste

1 Läuferkörper

2 Wellenstümpfe

3 Nuten

4 Kupferleiter

5 Dämpferstäbe

6 Nutenverschlusstäbe

7 Kühlkanäle

7.1 Leiterende

7.2 Leiterende

8 Wasserkammer

9 Isolierschläuche

10 Verbindungskanal

11 Bohrungen

12 Leiterendstück